# EUROPÄISCHE PATENTANMELDUNG

(11) **EP 3 798 402 A1**
(43) Veröffentlichungstag der Anmeldung: **31.03.2021**
(21) Anmeldenummer: 19199986.1
(22) Anmeldetag: 27.09.2019
(51) Int. Cl.: E06B 3/66, E06B 3/663, E06B 3/673

(54) **ISOLIERGLASEINHEIT MIT KLEINER MITTLERER SCHEIBE**

(71) Anmelder: SAINT-GOBAIN GLASS FRANCE, 92400 Courbevoie (FR)
(72) Erfinder: WEISSLER, Ariane, 52064 Aachen (DE); DALZIN, Fabien, 60200 COMPIEGNE (FR); FLORIN, Pierrick, 60153 Rethondes (FR)
(74) Vertreter: Lendvai, Tomas

(57) **Zusammenfassung**

Isolierglaseinheit (I), mindestens umfassend
- eine erste äußere Scheibe (13), eine ebenso große zweite äußere Scheibe (14), die deckungsgleich zur ersten äußeren Scheibe (13) angeordnet ist, und eine dazwischen angeordnete kleinere mittlere Scheibe (15), wobei
- die mittlere Scheibe (15) über einen umlaufenden ersten Abstandhalterrahmen (6.1) mit der ersten äußeren Scheibe (13) unter Bildung eines ersten inneren Scheibenzwischenraums (16.1) feuchtigkeitsdicht verbunden ist,
- die mittlere Scheibe (15) über einen umlaufenden zweiten Abstandhalterrahmen (6.2) mit der zweiten äußeren Scheibe (14) unter Bildung eines zweiten inneren Scheibenzwischenraums (16.2) feuchtigkeitsdicht verbunden ist,
- die mittlere Scheibe (15) so angeordnet ist, dass die Kanten der mittleren Scheibe (23) bezogen auf die Kanten der äußeren Scheiben (21, 22) zurückversetzt sind, sodass ein umlaufender und durchgehender äußerer Scheibenzwischenraum (17) von der ersten äußeren Scheibe (13), dem ersten Abstandhalterrahmen (6.1), der Kante der mittleren Scheibe (23), dem zweiten Abstandhalterrahmen (6.2) und der zweiten äußeren Scheibe (14) begrenzt ist,
- der äußere Scheibenzwischenraum (17) mit einem sekundären Dichtmittel (18) gefüllt ist, sodass die Kante der mittleren Scheibe (23) mit dem sekundären Dichtmittel (18) bedeckt ist.

## Beschreibung

Die Erfindung betrifft eine Isolierglaseinheit, ein Verfahren zur Herstellung einer Isolierglaseinheit, eine Vorrichtung zur Herstellung einer Isolierglaseinheit und die Verwendung der Isolierglaseinheit.

Isolierglaseinheiten enthalten in der Regel mindestens zwei Scheiben aus Glas oder polymeren Materialien. Die Scheiben sind über einen vom Abstandhalter (Spacer) definierten Gas- oder Vakuumraum voneinander getrennt. Die Verbindung zwischen Scheibe und Abstandshalter wird über eine Klebeverbindung aus organischem Polymer, beispielsweise Polyisobutylen erzeugt. Das Wärmedämmvermögen von Isolierglas ist deutlich höher als das von Einfachglas und kann in Dreifachverglasungen oder mit speziellen Beschichtungen noch weiter gesteigert und verbessert werden. So ermöglichen beispielsweise silberhaltige Beschichtungen eine verringerte Transmission von infraroter Strahlung und senken so die Abkühlung eines Gebäudes im Winter.

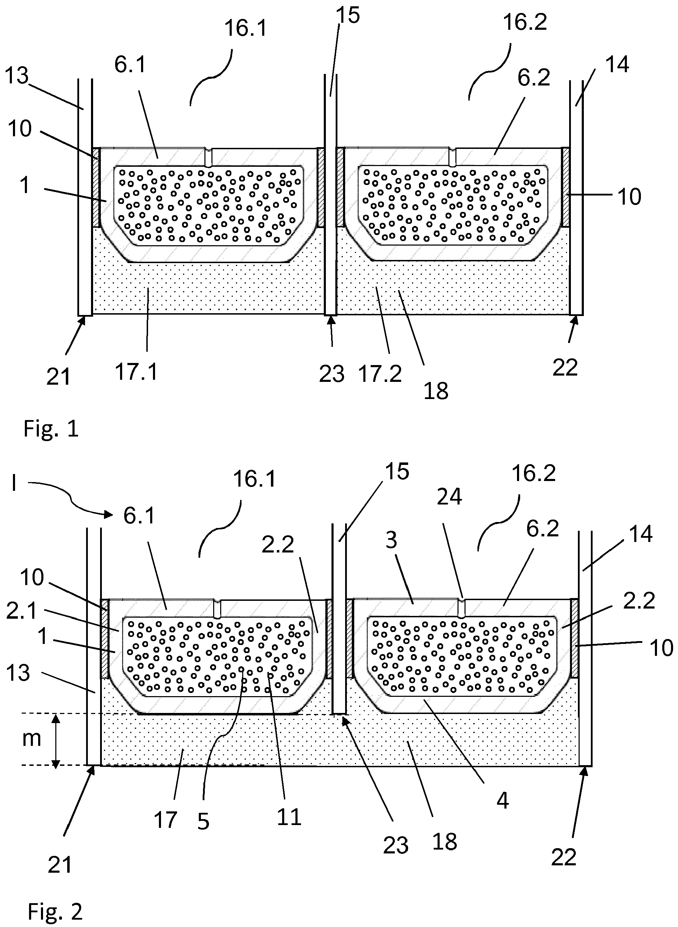

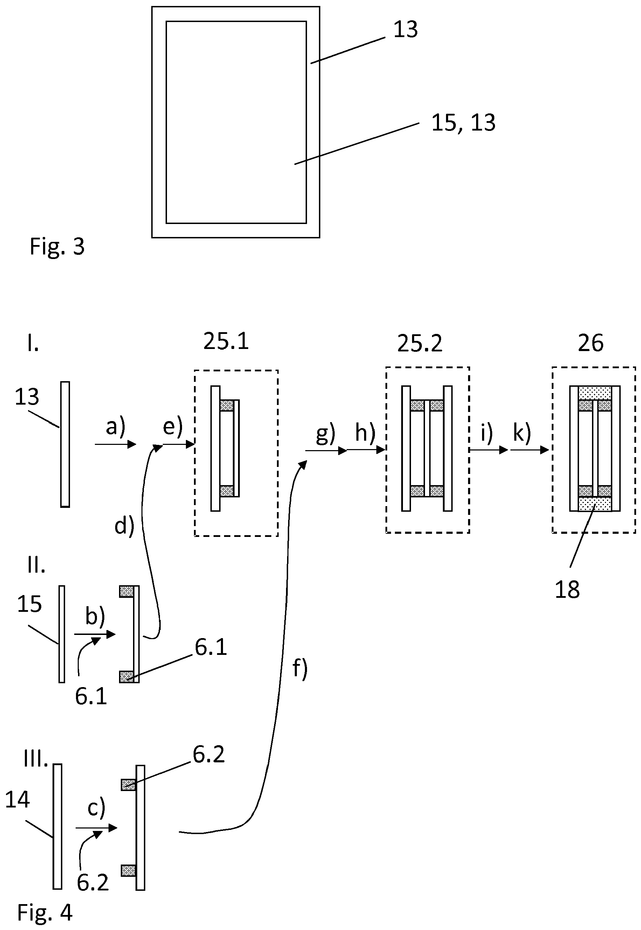

Dreifachisolierverglasungen enthalten üblicherweise drei gleich große Scheiben, die über zwei getrennte Abstandhalterrahmen verbunden sind, sodass zwei getrennte Scheibenzwischenräume entstehen (siehe Figur 1). Da die drei Scheiben in der Regel gleich groß sind, liegen alle Kanten der Scheiben auf gleicher Höhe und haben Kontakt zur äußeren Umgebung. Die Kanten können auch direkt mit einem Fensterrahmen in Kontakt stehen. Es sind auch Isolierverglasungen bekannt, die unterschiedlich große Scheiben einsetzen. Diese werden als Stufenisolierverglasungen bezeichnet. Bei Dreifachisolierverglasungen sind in diesem Fall zwei Glasscheiben gleich groß und eine dritte äußere Glasscheibe ist kleiner oder größer, sodass sich eine Stufe am Rand der Verglasung ergibt. Auch bei diesen Isolierverglasungen liegen die Kanten aller Scheiben frei. Ein Problem bei der Herstellung von Isolierverglasungen mit unterschiedlich großen Scheiben ist, dass es während des Transports eines noch nicht vollständig ausgehärteten Scheibenverbunds aus kleinerer und größerer Scheibe zum Abrutschen der kleineren Scheibe kommen kann. Ein Herstellungsverfahren für eine Stufenisolierverglasung, das diesen Aspekt über separate Stützvorrichtungen löst, ist zum Beispiel in der Veröffentlichung EP 3 133 234 A1 beschrieben.

Die Anbringung von Beschichtungen auf einer Scheibe einer Isolierglaseinheit kann zu einer Erwärmung der jeweiligen Scheibe führen. Dies ist insbesondere problematisch bei beschichteten mittleren Scheiben. Da die mittlere Scheibe im zentralen Bereich bei Sonneneinstrahlung sich stark erwärmt und im Randbereich, der oft innerhalb eines Fensterrahmens verborgen liegt, wesentlich kühler ist, treten dort Spannungen auf. Daher wird als mittlere Scheibe üblicherweise eine vorgespannte Scheibe und / oder eine Scheibe mit geschliffenen Kanten eingesetzt, um Glasbrüche zu verhindern. Dies wiederum erhöht die Kosten für die gesamte Isolierglaseinheit.

Es ist daher die Aufgabe der vorliegenden Erfindung, eine verbesserte Isolierglaseinheit bereitzustellen, die die oben genannten Nachteile nicht aufweist, sowie ein vereinfachtes Verfahren zu deren Herstellung und eine Vorrichtung zur Herstellung einer solchen Isolierglaseinheit bereitzustellen.

Die Aufgabe der vorliegenden Erfindung wird erfindungsgemäß durch eine Isolierglaseinheit nach dem unabhängigen Anspruch 1 gelöst. Bevorzugte Ausführungen der Erfindung gehen aus den Unteransprüchen hervor.

Ein erfindungsgemäßes Verfahren zur Herstellung einer Isolierglaseinheit, eine Vorrichtung zur Herstellung der erfindungsgemäßen Isolierglaseinheit und deren erfindungsgemäße Verwendung gehen aus weiteren unabhängigen Ansprüchen hervor.

Die erfindungsgemäße Isolierglaseinheit umfasst mindestens eine erste äußere Scheibe, eine gleichgroße zweite äußere Scheibe und eine zwischen diesen angeordnete kleinere mittlere Scheibe. Die erste äußere Scheibe und die zweite äußere Scheibe sind parallel und deckungsgleich zueinander angeordnet, das heißt die Kanten dieser beiden Scheiben sind umlaufend auf einer Höhe angeordnet. Zwischen der ersten äußeren Scheibe und der mittleren Scheibe ist ein erster Abstandhalterrahmen angeordnet und zwischen der mittleren Scheibe und der zweiten äußeren Scheibe ist ein zweiter Abstandhalterrahmen angeordnet. Die mittlere Scheibe ist über den umlaufenden ersten Abstandhalterrahmen mit der ersten äußeren Scheibe feuchtigkeitsdicht verbunden, sodass von der mittleren Scheibe, der ersten äußeren Scheibe und dem ersten Abstandhalterrahmen ein erster innerer Scheibenzwischenraum begrenzt wird. Die mittlere Scheibe ist über den zweiten umlaufenden Abstandhalterrahmen feuchtigkeitsdicht mit der zweiten äußeren Scheibe verbunden, sodass von der mittleren Scheibe, der zweiten äußeren Scheibe und dem zweiten umlaufenden Abstandhalterrahmen ein zweiter innerer Scheibenzwischenraum begrenzt ist. Die Abstandhalterrahmen sind umlaufend angeordnet, das heißt sie sind jeweils durchgehend als Begrenzung eines Scheibenzwischenraums ausgeführt, ohne dass es Lücken in dem jeweiligen Abstandhalterrahmen gibt, durch die Feuchtigkeit in den inneren Scheibenzwischenraum dringen kann.
Die mittlere Scheibe ist so an den äußeren Scheiben befestigt, dass die Kanten der mittleren Scheibe in Bezug auf die Kanten der äußeren Scheiben zurückversetzt sind, sodass ein umlaufender durchgehender äußerer Scheibenzwischenraum entsteht. Der äußere Scheibenzwischenraum ist der Raum, der von der ersten äußeren Scheibe, der zweiten äußeren Scheibe und den beiden Abstandhalterrahmen sowie von der Kante der mittleren Scheibe begrenzt ist. Der äußere Scheibenzwischenraum ist offen zur äußeren Umgebung und ist zwischen der ersten äußeren Scheibe und der zweiten äußeren Scheibe mit einem sekundären Dichtmittel gefüllt. Dabei ist die Kante der mittleren Scheibe mit dem sekundären Dichtmittel bedeckt, das heißt die Kante steht in direktem Kontakt mit dem sekundären Dichtmittel. Das sekundäre Dichtmittel dient der mechanischen Stabilisierung des Randverbunds der Isolierglaseinheit und nimmt einen Teil der Klimalasten auf, die auf den Randverbund wirken. Da die Kante der mittleren Scheibe durch das sekundäre Dichtmittel bevorzugt vollständig bedeckt ist, ist sie vor mechanischer Beschädigung geschützt. Zudem ist sie thermisch gegenüber der Umgebungstemperatur isoliert. Somit treten bei Sonneneinstrahlung weniger thermisch bedingte Spannungen im mittleren Glas auf, was die Langzeitstabilität der mittleren Scheibe verbessert. Da die Kante der mittleren Scheibe zurückversetzt ist, hat die Kante keinen Kontakt zum Rahmen oder der im Rahmen angeordneten Verklotzung. Damit werden Probleme vermieden, die durch eine vorstehende Kante der mittleren Scheibe ausgelöst werden, wenn nämlich das gesamte Gewicht der Isolierglaseinheit auf der Kante der mittleren Scheibe ruht.

In einer bevorzugten Ausführungsform füllt das sekundäre Dichtmittel den äußeren Scheibenzwischenraum vollständig aus, sodass das sekundäre Dichtmittel bündig mit den Kanten der äußeren Scheiben abschließt. Dies verbessert die mechanische Stabilisierung des Randverbunds und die thermische Isolierung der mittleren Scheibenkante.

Sogenannte Low-E-Beschichtungen bieten eine effektive Möglichkeit Infrarotstrahlung bereits vor Eintritt in den Wohnraum abzuschirmen und gleichzeitig Tageslicht hindurchzulassen. Low-E-Beschichtungen sind Wärmestrahlung reflektierende Beschichtungen, die einen erheblichen Teil der Infrarotstrahlung reflektieren, was im Sommer zu einer verringerten Erwärmung des Wohnraums führt. Die verschiedensten Low-E-Beschichtungen sind beispielsweise bekannt aus DE 10 2009 006 062 A1, WO 2007/101964 A1, EP 0 912 455 B1, DE 199 27 683 C1, EP 1 218 307 B1 und EP 1 917 222 B1. In einer bevorzugten Ausführungsform ist die mittlere Scheibe mit einer Low-e-Beschichtung versehen, bevorzugt mit einer silberhaltigen Beschichtung. Dank der Isolierung der mittleren Scheibe durch die zurückversetzte Anordnung ist bei Sonneneinstrahlung die Temperaturdifferenz zwischen erwärmter mittlerer Scheibe und äußerer Umgebung nicht so groß wie bei einer Isolierverglasung nach dem Stand der Technik. Somit ist die Gefahr des Scheibenbruchs aufgrund thermischer Spannungen wesentlich verringert. Besonders bevorzugt ist die mittlere Scheibe zusätzlich nicht thermisch oder chemisch vorgespannt. Dies ist möglich dank des erfindungsgemäßen Aufbaus und führt zu einer Verringerung der Produktionskosten.

In einer bevorzugten Ausführungsform der erfindungsgemäßen Isolierglaseinheit sind die äußeren Scheiben und die mittlere Scheibe mit dem ersten Abstandhalterrahmen und mit dem zweiten Abstandhalterrahmen jeweils über ein primäres Dichtmittel verbunden. Das primäre Dichtmittel ist bevorzugt ein Butyl, bevorzugt ein Polyisobutylen. Damit wird eine langzeitstabile und feuchtigkeitsdichte Verbindung zwischen Scheibe und Abstandhalterrahmen sichergestellt.

In einer bevorzugten Ausführungsform sind der erste Abstandhalterrahmen und der zweite Abstandhalterrahmen jeweils Hohlprofilabstandhalterrahmen. Der Hohlraum führt zu einer Gewichtsreduktion im Vergleich zu einem massiv ausgeformten Abstandhalter und steht zur Aufnahme von weiteren Komponenten, wie beispielsweise eines Trockenmittels, zur Verfügung. Als Trockenmittel sind besonders Kieselgele, Molekularsiebe, CaCl₂, Na₂SO₄, Aktivkohle, Silikate, Bentonite, Zeolithe und/oder Gemische davon geeignet.
Die Hohlprofilabstandhalterrahmen können Abstandhalterrahmen sein, die aus einzelnen starren Hohlprofilabstandhalterstücken über Eck- oder Längsverbinder zusammengesteckt sind. Alternativ können die Abstandhalterrahmen auch durch Biegen aus einem langen Hohlprofilabstandhalter hergestellt sein, der an einer Stelle zum Beispiel verklebt oder verschweißt ist. Bevorzugt sind die Hohlprofilabstandhalter polymere Hohlprofilabstandhalter, da deren wärmeisolierenden Eigenschaften gegenüber denen von metallischen Hohlprofilabstandhaltern verbessert sind.

In einer alternativen bevorzugten Ausführungsform ist nur einer der beiden Abstandhalterrahmen ein Hohlprofilabstandhalterrahmen und der andere Abstandhalterrahmen besteht aus Abstandhaltern mit einem massiven Grundkörper, beispielsweise ein flexibler Abstandhalter aus einem thermoplastischen Elastomer. Alternativ bevorzugt bestehen beide Abstandhalterrahmen aus Abstandhaltern mit massiven Grundkörpern.

In einer weiteren bevorzugten Ausführungsform sind die Kanten der mittleren Scheibe bezogen auf die Kanten der äußeren Scheiben um 2 mm bis 12 mm zurückversetzt, bevorzugt um 3 mm bis 7 mm, besonders bevorzugt um 4 mm bis 6 mm. In diesem Fall ist die Isolierung der mittleren Scheibe durch das sekundäre Dichtmittel im äußeren Scheibenzwischenraum besonders effektiv.

Zurückversetzt im Sinne der Erfindung bedeutet, dass die Kanten der mittleren Scheibe bezogen auf die Kanten der äußeren Scheiben in Richtung des inneren Scheibenzwischenraums versetzt sind.

In einer bevorzugten Ausführungsform sind die Kanten der mittleren Scheibe entlang aller Kanten um den gleichen Abstand zurückversetzt gegenüber den Kanten der äußeren Scheiben. So ergibt sich ein einheitlich großer äußerer Scheibenzwischenraum entlang des gesamten Umfangs der Isolierglaseinheit. Dies vereinfacht die automatisierte Versiegelung des äußeren Scheibenzwischenraums mit einem sekundären Dichtmittel.

Der erste Abstandhalterrahmen und der zweite Abstandhalterrahmen haben jeweils eine erste Seitenwand, eine parallel dazu angeordnete zweite Seitenwand, eine Verglasungsinnenraumwand und eine Außenwand. Die Verglasungsinnenraumwand ist dabei im Wesentlichen senkrecht zu den Seitenwänden angeordnet und verbindet die erste Seitenwand mit der zweiten Seitenwand. Die Seitenwände sind die Wände des Abstandhalterrahmens, an denen die einzelnen Scheiben der Isolierglaseinheit angebracht werden. Die Verglasungsinnenraumwand ist die Wand des Abstandhalterrahmens, die zum inneren Scheibenzwischenraum weist. Die Außenwand ist im Wesentlichen parallel zur Verglasungsinnenraumwand angeordnet und verbindet die erste Seitenwand mit der zweiten Seitenwand. Die Außenwand weist zum äußeren Scheibenzwischenraum. Die Außenwand verläuft bevorzugt im Wesentlichen senkrecht zu den Seitenwänden. Eine plane Außenwand, die sich in ihrem gesamten Verlauf senkrecht zu den Seitenwänden (parallel zur Verglasungsinnenraumwand) verhält, hat den Vorteil, dass die Dichtfläche zwischen Abstandhalter und Seitenwänden maximiert wird und eine einfachere Formgebung den Produktionsprozess erleichtert. In einer alternativen Ausführungsform sind die den Seitenwänden nächstliegenden Abschnitte der Außenwand in einem Winkel α (alpha) von 30° bis 60° zur Außenwand in Richtung der Seitenwände geneigt. Diese Ausführung verbessert die Stabilität des Hohlprofilabstandhalterrahmens.

Besonders bevorzugt sind der erste und zweite Abstandhalterrahmen polymere Hohlprofilabstandhalterrahmen. Diese haben den Vorteil, dass sie besonders gute wärmeisolierende Eigenschaften haben.

In einer bevorzugten Ausführungsform sind der erste innere Scheibenzwischenraum und der zweite innere Scheibenzwischenraum gleich groß und deckungsgleich. Dies ist von Vorteil für das optische Erscheinungsbild einer Dreifachisolierverglasung. Die Außenwände des ersten Abstandhalterrahmens und des zweiten Abstandhalterrahmens sind in dieser bevorzugten Ausführungsform auf gleicher Höhe angeordnet.
Besonders bevorzugt ist die Kante der mittleren Scheibe auf der gleichen Höhe angeordnet wie die Außenwände der beiden Abstandhalterrahmen. Dies erleichtert die Versiegelung mit sekundärem Dichtmaterial, da eine weiter vorstehende Kante der mittleren Scheibe eine automatisierte Füllung erschweren würde. Zudem ist so eine möglichst große Menge an sekundärem Dichtmittel zwischen der mittleren Kante und der äußeren Umgebung angeordnet, was zu einer verbesserten Isolierung führt.

Bevorzugt enthält das sekundäre Dichtmittel Polymere oder silanmodifizierte Polymere, besonders bevorzugt organische Polysulfide, Silikone, raumtemperaturvernetzenden (RTV) Silikonkautschuk, peroxidischvernetzten Silikonkautschuk und/oder additionsvernetzten Silikonkautschuk, Polyurethane und/oder Butylkautschuk. Diese Dichtmittel haben eine besonders gute stabilisierende Wirkung.

Die erste äußere Scheibe, die mittlere Scheibe und die zweite äußere Scheibe der Isolierglaseinheit enthalten bevorzugt Glas, Keramik und/oder Polymere, besonders bevorzugt Quarzglas, Borosilikatglas, Kalk-Natron-Glas, Polymethylmethacrylat oder Polycarbonat. Es könnten auch mehrere Scheiben als Verbundglasscheibe ausgebildet sein.

Die erste Scheibe und die zweite Scheibe verfügen über eine Dicke von 2 mm bis 50 mm, bevorzugt 3 mm bis 16 mm, wobei beide Scheiben auch unterschiedliche Dicken haben können. Die mittlere Scheibe hat eine Dicke von 0,5 mm bis 8 mm, bevorzugt von 1,6 mm bis 3 mm. Dank der besonders guten Stabilisierung der mittleren Scheibe in der erfindungsgemäßen Isolierverglasung sind diese geringen Dicken der mittleren Scheibe möglich.

Bevorzugt sind in der erfindungsgemäßen Isolierglaseinheit polymere Hohlprofilabstandhalter eingebaut. Polymere Abstandhalter haben bessere wärmeisolierende Eigenschaften als metallische Abstandhalter, sind aber weniger feuchtigkeitsdicht. Zur Verbesserung der Gas- und Feuchtigkeitsdichtigkeit ist es bekannt, gasdichte und feuchtigkeitsdichte Barrierefolien auf der Außenwand und mindestens einem Teil der Seitenwände anzubringen. Die Barrierefolie verhindert das Eindringen von Feuchtigkeit in den Hohlraum des Abstandhalters. Die Barrierefolie kann eine Metallfolie oder Polymerfolie sein oder eine mehrschichtige Folie mit polymeren und metallischen Schichten oder mit polymeren und keramischen Schichten oder mit polymeren, metallischen und keramischen Schichten. Eine geeignete Folie ist zum Beispiel in WO2013/104507 A1 beschrieben.

Der erste und zweite Abstandhalterrahmen weist bevorzugt entlang der Verglasungsinnenraumwand eine Breite von 5 mm bis 55 mm, bevorzugt von 10 mm bis 20 mm auf. Die Breite ist im Sinne der Erfindung die sich zwischen den Seitenwänden erstreckende Dimension. Die Breite ist der Abstand zwischen den voneinander abgewandten Flächen der beiden Seitenwände. Durch die Wahl der Breite der Verglasungsinnenraumwand wird der Abstand zwischen den Scheiben der Isolierglaseinheit bestimmt. Das genaue Abmaß der Verglasungsinnenraumwand richtet sich nach den Dimensionen der Isolierglaseinheit und der gewünschten Scheibenzwischenraumgröße.

Der erste und zweite Abstandhalterrahmen weisen bevorzugt entlang der Seitenwände eine Höhe von 5 mm bis 15 mm, besonders bevorzugt von 5 mm bis 10 mm, auf. In diesem Bereich für die Höhe besitzt der Abstandhalter eine vorteilhafte Stabilität, ist aber andererseits in der Isolierglaseinheit vorteilhaft unauffällig. Die Höhe des Abstandhalters ist der Abstand zwischen den voneinander abgewandten Flächen der Außenwand und der Verglasungsinnenraumwand.

Grundsätzlich sind verschiedenste Geometrien der Isolierglaseinheit möglich, beispielsweise rechteckige, trapezförmige und abgerundete Formen.

In einer weiteren Ausführungsform umfasst die Isolierglaseinheit mehr als drei Scheiben, bevorzugt vier Scheiben. Dabei umfasst die Isolierglaseinheit neben den zwei äußeren Scheiben eine erste mittlere Scheibe und eine zweite mittlere Scheibe. Die Scheiben sind über drei Abstandhalterrahmen miteinander verbunden, wobei mindestens eine mittlere Scheibe kleiner als die deckungsgleichen äußeren Scheiben ist, bevorzugt beide mittlere Scheiben kleiner als die äußeren Scheiben sind. Die oben angegebenen bevorzugten Ausführungen und Vorteile sind analog auf Isolierglaseinheiten mit mehr als drei Scheiben übertragbar.

Die Erfindung umfasst ferner ein Verfahren zur Herstellung einer erfindungsgemäßen Isolierglaseinheit.
In einer ersten bevorzugten Ausführungsform umfasst das erfindungsgemäße Verfahren mindestens die folgenden Schritte:
- Bereitstellen einer ersten äußeren Scheibe, einer zweiten äußeren Scheibe und einer mittleren Scheibe, wobei die Scheiben üblicherweise gewaschen und getrocknet werden.
- Befestigen eines ersten Abstandhalterrahmens auf der mittleren Scheibe oder der ersten äußeren Scheibe, wobei die Befestigung bevorzugt über ein primäres Dichtmittel erfolgt, sodass eine feuchtigkeitsdichte Verbindung zwischen Scheibe und Abstandhalterrahmen entsteht. Das primäre Dichtmittel wird bevorzugt zunächst auf dem Abstandhalterrahmen appliziert und dann auf der mittleren Scheibe positioniert und angedrückt. Das primäre Dichtmittel wird zudem auf der in Richtung der äußeren Scheibe weisenden Seitenwand des Abstandhalterrahmens vorgesehenen.
- Verpressen der ersten äußeren Scheibe mit der mittleren Scheibe unter Bildung eines zweifachen Scheibenpakets. Das Scheibenpaket hat dann bereits einen abgeschlossenen ersten inneren Scheibenzwischenraum.
- Befestigen eines zweiten Abstandhalterrahmens auf der zweiten äußeren Scheibe. Dies wird analog zur Befestigung des ersten Abstandhalterrahmens auf der ersten äußeren Scheibe durchgeführt. Dieser Schritt wird bevorzugt zeitlich so versetzt durchgeführt, dass die zweite äußere Scheibe direkt nach dem Verpressen von äußerer Scheibe und mittlerer Scheibe bereitsteht. So können die Herstellungszeiten verkürzt werden.
- Verpressen der zweiten äußeren Scheibe mit der Anordnung aus mittlerer Scheibe und erster äußerer Scheibe in der Pressvorrichtung unter Bildung eines dreifachen Scheibenpakets mit einem äußeren Scheibenzwischenraum.
- Befüllen des äußeren Scheibenzwischenraums in einer Versiegelungsstation mit einem sekundären Dichtmittel.

Das Verfahren wird bevorzugt so durchgeführt, dass die Scheiben aufrecht von einem Ort zum nächsten Ort transportiert werden und auch während des Verpressens die Scheiben aufrecht orientiert sind. Das bedeutet, dass die Scheiben mit ihren Kanten auf einer Fördervorrichtung stehen und über diese weitertransportiert werden. Die Fördervorrichtung kann zum Beispiel ein Bandförderer oder ein Rollenförderer sein.

In einer bevorzugten Ausführungsform wird wenigstens das zweifache Scheibenpaket aus mittlerer Scheibe und erster äußere Scheibe über eine Fördervorrichtung transportiert, auf der die Kante der ersten äußeren Scheibe und die Kante der mittleren Scheibe gleichzeitig aufliegen. So kann ein Abrutschen der mittleren Scheibe im zweifachen Scheibenpaket direkt nach dem Verpressen wirksam verhindert werden. Besonders bevorzugt ist die Fördervorrichtung ein Rollenförderer. Der Rollenförderer hat bevorzugt mehrere Rollen mit unterschiedlichem Durchmesser d1 und d2. Dabei wird die Kante der mittleren Scheibe von den Rollen mit dem größeren Durchmesser unterstützt und die Kante der äußeren Scheiben von den Rollen mit dem kleineren Durchmesser unterstützt. Alternativ hat der Rollenförderer gestufte Rollen mit einem ersten Bereich mit einem ersten Durchmesser d1 und einem zweiten Bereich mit einem zweiten größeren Durchmesser d2. Dabei liegt die Kante der mittleren Scheibe im zweiten Bereich der gestuften Rollen auf und die Kante der äußeren Scheibe im ersten Bereich auf. Somit werden beide Kanten eines zweifachen Scheibenpakets abgestützt, sodass die Anordnung während eines Transports optimal stabilisiert ist.
In einer bevorzugten Ausführungsform werden auch die einzelnen Scheiben über die gestuften Rollen transportiert. Diese liegen dann mit ihren Kanten im Bereich mit dem kleineren oder dem größeren Durchmesser auf. Dies vereinfacht den Aufbau der Anlage.

Das Verpressen der Scheiben erfolgt in einer Pressvorrichtung. Eine Pressvorrichtung umfasst zwei gegenüberliegende parallel angeordnete Pressplatten, von denen mindestens eine über Halteeinrichtungen für eine Scheibe verfügt, wie zum Beispiel Saugnäpfe. Eine Pressvorrichtung verfügt bevorzugt über eine Hebevorrichtung, mit der eine Scheibe in die richtige Position bewegt werden kann. Die Hebevorrichtung ist bevorzugt in vertikaler und horizontaler Richtung beweglich. Der Abstand zwischen den Pressplatten ist veränderlich, sodass zwei Glasscheiben mit einem dazwischen angeordneten Abstandhalter zu einem Scheibenpaket zusammengepresst werden können. Über die Fördervorrichtung wird eine erste Scheibe in die Pressvorrichtung eingefahren und über Halteeinrichtungen an einer der beiden Pressplatten gehalten. Eine zweite Scheibe oder ein Scheibenpaket wird ebenfalls in die Pressvorrichtung eingefahren. Auf einer der Scheiben in der Pressvorrichtung muss zuvor ein Abstandhalterrahmen angeordnet worden sein, sodass durch Verringern des Abstands zwischen den Pressplatten die Scheiben zu einem Scheibenpaket mit einem abgeschlossenen inneren Scheibenzwischenraum verpresst werden.

In einer bevorzugten Ausführungsform des erfindungsgemäßen Verfahrens wird das zweifache Scheibenpaket in einer ersten Pressvorrichtung erzeugt und das dreifache Scheibenpaket in einer zweiten Pressvorrichtung erzeugt. Während das zweifache Scheibenpaket in der ersten Pressvorrichtung verpresst wird, kann bereits die zweite äußere Scheibe mit einem Abstandhalterrahmen vorbereitet werden und in die zweite Pressvorrichtung transportiert werden. Dank der zwei Pressvorrichtungen können so die Herstellungszeiten für die Isolierglaseinheiten verringert werden und so Produktionskosten gespart werden.

In einer alternativen Ausführungsform gibt es nur eine Pressvorrichtung, die nach der Herstellung des zweifachen Scheibenpakets wieder geöffnet wird, sodass eine weitere äußere Scheibe in die Pressvorrichtung transportiert werden kann, die dann mit dem in der Pressvorrichtung befindlichen Scheibenpaket zu einem weiteren Scheibenpaket verpresst werden kann. Dieses Verfahren hat den Vorteil, dass das instabile zweifache Scheibenpaket nicht bis zu einer zweiten Pressvorrichtung transportiert werden muss.

In einer bevorzugten Ausführungsform wird die Isolierglaseinheit mit einem inerten Gas befüllt, wie zum Beispiel Argon. Die Befüllung findet vor dem endgültigen Verpressen statt und kann in einer Befüllstation erfolgen, die in Förderrichtung vor der Pressvorrichtung angeordnet ist.
Besonders bevorzugt erfolgt die Befüllung der Isolierglaseinheit an einem vorläufig zusammengesetzten Scheibenpaket aus drei Scheiben und Abstandshalterrahmen, wobei die drei Scheiben nicht parallel angeordnet sind, sondern in einem Winkel von 0° bis 10° abgewinkelt zur benachbarten Scheibe positioniert sind; über die dann offene Seite wird ein inertes Gas in den ersten und den zweiten inneren Scheibenzwischenraum eingefüllt. Dieses Vorgehen ermöglicht die simultane Befüllung beider Scheibenzwischenräume. Der detaillierte Prozess ist beschrieben in der WO2013088044A2.

Die Erfindung umfasst weiterhin eine Vorrichtung zur Herstellung einer erfindungsgemäßen Isolierglaseinheit.
Die Vorrichtung umfasst mindestens eine Pressvorrichtung zum Verpressen von zwei Scheiben und eine Versiegelungsstation zum Einbringen eines sekundären Dichtmittels. Über eine Fördervorrichtung zum Transportieren einer Scheibe oder eines Scheibenpakets können eine Scheibe oder ein Scheibenpaket in eine Pressvorrichtung hinein oder hinaus transportiert werden. Die Fördervorrichtung ist dabei so vorgesehen, dass die Scheiben oder die Scheibenpakete mit den Kanten auf der Fördervorrichtung aufliegen. Das bedeutet, die Scheiben werden in aufrechter Position transportiert und stehen auf der Fördervorrichtung. Die Fördervorrichtung ist ein Rollenförderer, der mehrere gestufte Rollen aufweist. Die gestuften Rollen haben einen ersten Bereich mit einem ersten Durchmesser d1 und einen zweiten Bereich mit einem größeren zweiten Durchmesser d2, wobei der zweite Bereich zur Unterstützung der Kante der mittleren Scheibe dient. Dank der gestuften Rollen kann ein Abrutschen der mittleren Scheibe in einem gerade verpressten Scheibenpaket verhindert werden.

In einer bevorzugten Ausführungsform sind die gestuften Rollen so ausgeführt, dass ein Scheibenpaket aus einer äußeren Scheibe und der mittleren Scheibe auf den gestuften Rollen so transportiert werden kann, dass gleichzeitig eine Kante der äußeren Scheibe im ersten Bereich aufliegt und die Kante der mittleren Scheibe im zweiten Bereich aufliegt. So werden beide Scheiben gleichzeitig unterstützt und ein Verrutschen einer Scheibe wird wirksam verhindert.

In einer bevorzugten Ausführungsform der erfindungsgemäßen Vorrichtung umfasst die Vorrichtung eine erste und eine zweite Pressvorrichtung, wobei die zweite Pressvorrichtung in Förderrichtung zwischen der ersten Pressvorrichtung und der Versiegelungsstation angeordnet ist. Dank der zweiten Pressvorrichtung können mehr Isolierglaseinheiten pro Zeiteinheit hergestellt werden.

Die Erfindung umfasst weiterhin die Verwendung der erfindungsgemäßen Isolierglaseinheit als Gebäudeinnenverglasung, Gebäudeaußenverglasung und / oder Fassadenverglasung.

Die für die Isolierglaseinheit beschriebenen Ausführungsformen und damit verbundenen Vorteile sind ebenso auf das Verfahren und die Vorrichtung anzuwenden und umgekehrt.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein. Es zeigen:
- Figur 1: einen Querschnitt einer bekannten Isolierglaseinheit,
- Figur 2: einen Querschnitt einer möglichen Ausführungsform einer erfindungsgemäßen Isolierglaseinheit,
- Figur 3: eine Draufsicht auf die äußere Scheibe mit darauf angeordneter mittlerer Scheibe der in Figur 2 gezeigten Isolierglaseinheit,
- Figur 4: eine schematische Darstellung eines erfindungsgemäßen Verfahrens zur Herstellung einer Isolierglaseinheit,
- Figur 5: eine schematische Darstellung einer Fördervorrichtung zum Transport eines Scheibenpakets,
- Figur 6: eine schematische Darstellung eines Querschnitts entlang A - A' in Figur 5.

Figur 1 zeigt einen Querschnitt des Randbereichs einer bekannten Isolierglaseinheit mit zwei üblichen Hohlprofilabstandhaltern 1. Eine erste Scheibe 13 ist über einen ersten Abstandhalterrahmen 6.1 mit einer mittleren Scheibe 15 verbunden, sodass zwischen erster Scheibe 13 und mittlerer Scheibe 15 ein erster innerer Scheibenzwischenraum 16.1 entsteht. Die mittlere Scheibe 15 ist weiterhin mit einem zweiten Abstandhalterrahmen 6.2 mithilfe eines primären Dichtmittels 10 verklebt, an dem eine zweite Scheibe 14 befestigt ist, sodass ein zweiter innerer Scheibenzwischenraum 16.2 entsteht. Alle drei Scheiben 13, 14 und 15 sind gleich groß und parallel und deckungsgleich angeordnet, das heißt die Kante der ersten Scheibe 21, die Kante der zweiten Scheibe 22 und die Kante der mittleren Scheibe 23 befinden sich auf einer Höhe. So entstehen zwei separate äußere Scheibenzwischenräume 17.1 und 17.2, die durch die mittlere Scheibe 15 getrennt sind. Beide äußeren Scheibenzwischenräume 17.1 und 17.2 sind vollständig mit sekundärem Dichtmittel 18 gefüllt. Diese Anordnung hat verschiedene Nachteile:
Bei der Befüllung des äußeren Scheibenzwischenräume 17.1 und 17.2 müssen zwei separate Räume befüllt werden, was zwei separate Düsen erfordert oder zwei separate Füllvorgänge nötig macht.
Die Kante der mittleren Scheibe 23 liegt in der gezeigten Anordnung frei. Nach Einbau in einen Fensterrahmen hat sie gegebenenfalls direkten Kontakt zum Rahmen oder der dort angeordneten Verklotzung. Wenn die mittlere Scheibe aufgrund eines Fehlers bei der Ausrichtung der Scheiben etwas über die Kanten der äußeren Scheiben vorsteht, ruht das gesamte Gewicht der Isolierglaseinheit auf der mittleren Scheibe. Dies kann zu einem vorzeitigen Versagen der Abdichtung des Randverbunds führen. Die mittlere Scheibe heizt sich besonders bei Sonneneinstrahlung stark auf, da sie außer an den Kanten 23 keinen Kontakt zur kühleren äußeren Umgebung hat. Daher gibt es einen signifikanten Temperaturunterschied zwischen dem im inneren Scheibenzwischenraum angeordneten Teil der mittleren Scheibe und der Kante der mittleren Scheibe. Durch diesen Temperaturunterschied entstehen Spannungen im Glas, die die mittlere Scheibe anfälliger für Glasbruch machen. Um dies effektiv zu verhindern, wird die mittlere Scheibe üblicherweise als vorgespannte Scheibe mit rundum geschliffenen Kanten eingesetzt, was die Gesamtkosten der Isolierglaseinheit erhöht.
Die mittlere Scheibe liegt ungeschützt frei zur äußeren Umgebung, was sie anfällig für Beschädigungen durch äußere Einwirkung während Transport und Einbau macht.
Bei der bekannten Anordnung ist eine exakte Ausrichtung der drei Scheiben besonders wichtig. Wenn zum Beispiel die Kante der mittleren Scheibe 23 an einer Seite übersteht und diese Kante nach dem Einbau in einen Fensterrahmen nach unten weist, steht das gesamte Gewicht auf der mittleren Scheibe 15, was die Langzeitstabilität der Isolierglaseinheit verringert.

Figur 2 zeigt einen Ausschnitt einer erfindungsgemäßen Isolierglaseinheit im Randbereich. Die Isolierglaseinheit umfasst zwei äußere Scheiben, 13 und 14 und eine dazwischen angeordnete mittlere Scheibe 15. Die äußeren Scheiben sind die Scheiben, die zur äußeren Umgebung weisen. Zwischen der ersten äußeren Scheibe 13 und der mittleren Scheibe 15 ist ein erster umlaufender Abstandhalterrahmen 6.1 angeordnet, der jeweils über ein primäres Dichtmittel 10 mit der ersten äußeren Scheibe 13 und der mittleren Scheibe 15 feuchtigkeitsdicht verbunden ist. Das primäre Dichtmittel 10 ist im Beispiel ein Polyisobutylen, da dies eine stabile feuchtigkeitsdichte Verbindung zwischen Scheibe und Abstandhalter ergibt. Zwischen der mittleren Scheibe 15 und der zweiten äußeren Scheibe 14 ist ein zweiter umlaufender Abstandhalter 6.2 mittels eines Polyisobutylens 10 befestigt. Somit entstehen zwei innere Scheibenzwischenräume 16.1 und 16.2, die gegen das Eindringen von Feuchtigkeit abgedichtet sind.
Die erste äußere Scheibe 13 und die zweite äußere Scheibe 14 sind gleich groß und deckungsgleich zueinander angeordnet. Die mittlere Scheibe 15 ist kleiner als die beiden äußeren Scheiben und so zwischen diesen Scheiben angeordnet, dass umlaufend ein Abstand m zwischen der Kante der mittleren Scheibe 23 und den Kanten der äußeren Scheiben 21 und 22 entsteht. Wie in Figur 3 gezeigt, ist die mittlere Scheibe 15 in Bezug zur äußeren Scheibe 13 zentral darüber angeordnet, sodass umlaufend ein einheitlich großer äußerer Scheibenzwischenraum 17 vorliegt. Die Kante der mittleren Scheibe 23 ist somit umlaufend um den Abstand m zurückversetzt gegenüber den Kanten der äußeren Scheiben 21 und 22. Der einheitlich große umlaufende äußere Scheibenzwischenraum 17 hat den Vorteil, dass die Isolierglaseinheit besonders stabil ist und zudem leichter maschinell herstellbar ist, da die automatisierte Befüllung des äußeren Scheibenzwischenraums mit sekundärem Dichtmittel 18 entlang des gesamten Umfangs der Scheiben mit den gleichen Einstellungen durchgeführt werden kann. Als sekundäres Dichtmittel 18 wird ein Polysulfid benutzt, wodurch eine gute Stabilisierung des Randverbunds sichergestellt wird. Das sekundäre Dichtmittel 18 bedeckt die Kante der mittleren Scheibe 23 vollständig, während die Kanten der äußeren Scheiben 21 und 22 freiliegen. Das sekundäre Dichtmittel 18 schließt bündig mit den Kanten der äußeren Scheiben ab.
Im Beispiel beträgt der Abstand m entlang aller vier Seiten der Scheibe 4,5 mm. Im Beispiel befindet sich die Kante der mittleren Scheibe 23 auf der gleichen Höhe wie die Außenwände 4 der Hohlprofilabstandhalter 1. Dies ist besonders gut herstellbar, da beim Aufsetzen eines Abstandhalterrahmens die Außenwand an der Kante der mittleren Scheibe ausgerichtet werden kann. Alternativ ist es auch denkbar, dass die Kante der mittleren Scheibe 23 weiter zurückversetzt ist. Die mittlere Scheibe 23 ist bevorzugt mindestens so groß, dass eine maximale Verklebungsfläche für die Verklebung mit primärem Dichtmittel 10 an den Seitenwänden 2.1 und 2.2 der Abstandhalter 1 ausgenutzt wird. Das heißt, dass die mittlere Scheibe sich bevorzugt über den gesamten Bereich der Seitenwände 2.1 und 2.2 der Abstandhalter erstreckt, der parallel zu den Scheiben verläuft. Die mittlere Scheibe 15 kann auch größer sein, sodass sich die Kante 23 bis über die Außenwand hinaus erstreckt. Bevorzugt bleibt jedoch ein Abstand m von mindestens 2 mm zwischen der Kante 23 und den Kanten der äußeren Scheiben 21 und 22, damit eine gute thermische Isolierung der mittleren Scheibe erzielt werden kann und die Scheibenkante 23 auch vor mechanischer Beschädigung gut geschützt ist.
Die erste äußere Scheibe 13 und die zweite äußere Scheibe 14 bestehen im Beispiel aus Kalk-Natron-Glas mit einer Dicke von 3 mm. Die mittlere Scheibe ist eine nicht vorgespannte 2 mm dicke Scheibe aus Kalk-Natron-Glas. Dank des geschützten Einbaus in der erfindungsgemäßen Isolierglaseinheit kann eine nicht vorgespannte relativ dünne mittlere Scheibe eingesetzt werden.
Der erste Abstandhalterrahmen 6.1 und der zweite Abstandhalterrahmen 6.2 bestehen aus identischen polymeren Hohlprofilabstandhaltern 1. Jeder Hohlprofilabstandhalter 1 umfasst eine erste Seitenwand 2.1, eine parallel dazu verlaufende Seitenwand 2.2, eine Verglasungsinnenraumwand 3 und eine Außenwand 4. Der Grundkörper des Hohlprofilabstandhalters besteht aus glasfaserverstärktem Polypropylen, das auf der Außenwand 4 und einem Teil der Seitenwände 2.1 und 2.2 mit einer metallisierten polymeren Folie versehen ist. Die Verglasungsinnenraumwand 3 verläuft senkrecht zu den Seitenwänden 2.1 und 2.2 und verbindet die beiden Seitenwände. Die Außenwand 4 liegt gegenüber der Verglasungsinnenraumwand 3 und verbindet die beiden Seitenwände 2.1 und 2.2. Die Außenwand 4 verläuft im Wesentlichen senkrecht zu den Seitenwänden 2.1 und 2.2. Die den Seitenwänden 2.1 und 2.2 nächstliegen Abschnitte 4.1 und 4.2 der Außenwand 4 sind jedoch in einem Winkel α (alpha) von etwa 45 ° zur Außenwand 4 in Richtung der Seitenwände 2.1 und 2.2 geneigt. Die abgewinkelte Geometrie verbessert die Stabilität des Hohlprofils 1. Die Wandstärke d des Hohlprofils beträgt 0,5 mm. Die Wandstärke d ist im Wesentlichen überall gleich. Dies verbessert die Stabilität des Hohlprofils und vereinfacht die Herstellung. Der Hohlprofilabstandhalter 1 weist eine Höhe von 6,5 mm und eine Breite von 12,5 mm auf. Somit hat die Isolierglaseinheit zwei 12,5 mm breite innere Scheibenzwischenräume. Der Hohlraum 5 ist mit einem Trockenmittel 11, zum Beispiel Molsieb, gefüllt. Über Perforierungen 24 in der Verglasungsinnenraumwand 3 ist der Hohlraum 5 mit den inneren Scheibenzwischenräumen 16.1 beziehungsweise 16.2 verbunden. Durch die Perforierungen 24 in der Verglasungsinnenraumwand 3 findet ein Gasaustausch zwischen dem Hohlraum 5 und dem inneren Scheibenzwischenraum 16.1 beziehungsweise 16.2 statt, wobei das Trockenmittel 11 die Luftfeuchtigkeit aus dem inneren Scheibenzwischenraum 16.1 beziehungsweise 16.2 aufnimmt.

Figur 4 zeigt eine schematische Darstellung einer möglichen Ausführungsform eines erfindungsgemäßen Verfahrens. Die Scheiben sind dabei im Querschnitt gezeigt. Die einzelnen Vorrichtungen der Isolierglaslinie sind schematisch durch gestrichelte Linien angedeutet. Der Aufbau der Pressvorrichtungen und Versiegelungsstationen ist aus dem Stand der Technik bekannt und wird hier nicht weiter ausgeführt. Das Verfahren ist dargestellt als drei untereinander angeordnete Stufen I., II. und III.. Diese Stufen sind separat dargestellt, können aber zeitlich parallel oder nacheinander durchgeführt werden. Eine gleichzeitige Durchführung führt zu einer verkürzten Herstellungsdauer.
Stufen I., II. und III. beginnen jeweils mit der Bereitstellung einer Scheibe. Dabei werden die Scheiben 13, 14 und 15 jeweils in einer Waschmaschine gewaschen, anschließend getrocknet und dann der Linie zugeführt.
In den Schritten II. b) und III. c) werden die mittlere Scheibe 15 beziehungsweise die zweite äußere Scheibe 14 mit dem ersten Abstandhalterrahmen 6.1 beziehungsweise dem zweiten Abstandhalterrahmen 6.2 versehen. Diese vorbereiteten Scheiben können dann dem in Stufe I. dargestellten Prozess zugeführt werden. Die einzelnen Schritte werden im Folgenden kurz beschrieben:
a) Transportieren der ersten äußeren Scheibe 13 in eine erste Pressvorrichtung 25.1.
d) Transportieren der mittleren Scheibe 15 mit darauf befestigtem Abstandhalterrahmen 6.1 in die erste Pressvorrichtung 25.1.
e) Verpressen der ersten äußeren Scheibe 13 mit der mittleren Scheibe 15 unter Bildung eines zweifachen Scheibenpakets.
f) Transportieren der zweiten äußeren Scheibe 15 mit darauf befestigtem Abstandhalterrahmen 6.2 in eine zweite Pressvorrichtung 25.2. Die Vorbereitung der zweiten äußeren Scheibe 15 erfolgt bevorzugt zeitlich so versetzt zu Schritt e), dass in der zweiten Pressvorrichtung 25.2 die vorbereitete äußere Scheibe 15 bereits positioniert ist, wenn das zweifache Scheibenpaket aus der ersten Pressvorrichtung herauskommt.
g) Transportieren des zweifachen Scheibenpakets aus erster äußerer Scheibe 13 und mittlerer Scheibe 15 in die zweite Pressvorrichtung 25.2.
h) Verpressen der zweiten äußeren Scheibe 14 mit der Anordnung aus mittlerer Scheibe 15 und erster äußerer Scheibe 13 unter Bildung eines dreifachen Scheibenpakets mit einem äußeren Scheibenzwischenraum,
i) Transportieren des dreifachen Scheibenpakets zu einer Versiegelungsstation 26,
k) Befüllen des äußeren Scheibenzwischenraums 17 in der Versiegelungsstation 26 mit einem sekundären Dichtmittel 18.

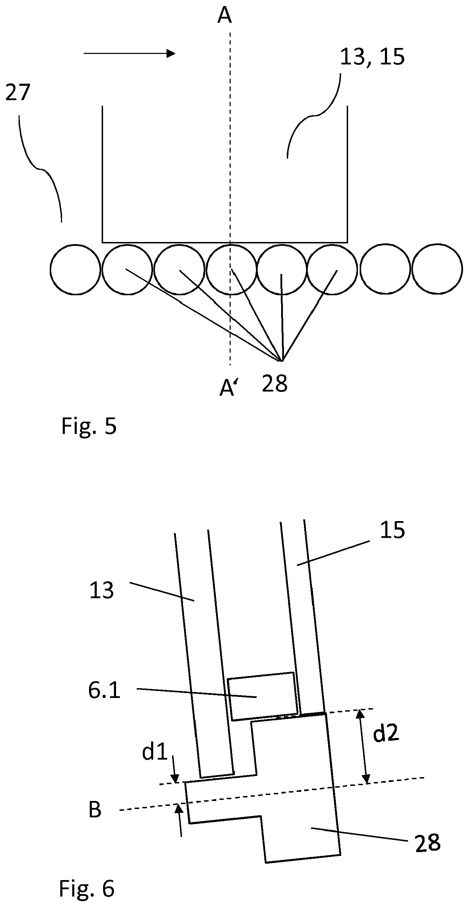

In Figur 5 ist eine Fördervorrichtung 27 gezeigt, die zum Transport eines Scheibenpakets oder einer Scheibe im erfindungsgemäßen Verfahren verwendet werden kann. Die Pressvorrichtungen 25.1 und 25.2 sowie die Versiegelungsstation 26 sind über Fördervorrichtungen verbunden, sodass einzelne Scheiben oder Scheibenpakete dorthin transportiert werden können. Scheiben werden aufrecht transportiert, das heißt sie stehen mit einer ihrer Kanten auf der Fördervorrichtung. Die gesamte Anordnung ist etwas geneigt dargestellt, da der Transport üblicherweise nicht exakt senkrecht zum Boden erfolgt. Üblicherweise lehnen die Scheiben an einer Seite gegen ein Gestell, das die Scheiben im Bereich der Scheibenfläche unterstützt. Dies ist bekannt aus dem Stand der Technik und ist hier nicht dargestellt. Wie in Figur 4 gezeigt, weist das Scheibenpaket aus erster Scheibe 13 und mittlerer Scheibe 15 eine Stufe auf. Da die mittlere Scheibe 15 nur über das primäre Dichtmittel zwischen Abstandhalterrahmen 6.1 und erster Scheibe 13 befestigt ist, kann die mittlere Scheibe 15 beim Transport zur zweiten Pressvorrichtung 25.2 verrutschen, wenn der Transport wie üblich über eine Fördervorrichtung erfolgt, in der nur die äußere Scheibe 13 unterstützt wird.
In einer vorteilhaften Ausgestaltung der Erfindung ist die Fördervorrichtung ein Rollenförderer 27 wie in Figur 6 schematisch dargestellt. Figur 6 zeigt einen Querschnitt durch die Linie A - A' in Figur 5, wobei der Pfeil in Figur 5 die Blickrichtung andeutet, aus der man den Querschnitt betrachtet. Figur 6 zeigt eine gestufte Rolle 28, die einen ersten Bereich mit einem ersten Durchmesser d1 hat und einen zweiten Bereich mit einem größeren zweiten Durchmesser d2 hat. Die Linie B verläuft durch die Mitte der gestuften Rolle 28. Im ersten Bereich liegt die Kante 21 der ersten äußeren Scheibe auf und im zweiten Bereich liegt die Kante 23 der mittleren Scheibe auf, sodass beide Kanten des zweifachen Scheibenpakets unterstützt werden. Bevorzugt sind diese gestuften Rollen wenigstens zwischen der ersten Pressvorrichtung 25.1 und der zweiten Pressvorrichtung 25.2 angeordnet, sodass eine gute Unterstützung der mittleren Scheibe 15 auf der Fördervorrichtung erfolgt. Alternativ bevorzugt sind die gestuften Rollen schon vor der ersten Pressvorrichtung 25.1 angeordnet, wobei die mittlere Scheibe im zweiten Bereich aufliegt und die äußeren Scheiben im ersten Bereich aufliegen. Die mittlere Scheibe wird somit auf den gestuften Rollen bereits vorpositioniert, sodass die mittlere Scheibe in der ersten Pressvorrichtung nicht mehr zwingend durch eine Hebevorrichtung angehoben werden muss.

### Bezugszeichenliste

- I: Isolierglaseinheit
- 1: Hohlprofil, Hohlprofilabstandhalter
- 2.1: erste Seitenwand
- 2.2: zweite Seitenwand
- 3: Verglasungsinnenraumwand
- 4: Außenwand
- 5: Hohlraum
- 6.1: erster Abstandhalterrahmen
- 6.2: zweiter Abstandhalterrahmen
- 10: primäres Dichtmittel
- 11: Trockenmittel
- 13: erste äußere Scheibe
- 14: zweite äußere Scheibe
- 15: mittlere Scheibe
- 16.1: erster innerer Scheibenzwischenraum
- 16.2: zweiter innerer Scheibenzwischenraum
- 17: äußerer Scheibenzwischenraum
- 18: sekundäres Dichtmittel
- 21: Kante der ersten äußeren Scheibe
- 22: Kante der zweiten äußeren Scheibe
- 23: Kante der mittleren Scheibe
- 24: Perforierung in der Verglasungsinnenraumwand
- 25: Pressvorrichtung
- 25.1: erste Pressvorrichtung
- 25.2: zweite Pressvorrichtung
- 26: Versiegelungsstation
- 27: Fördervorrichtung
- 28: gestufte Rolle
- 29: erster Bereich
- 30: zweiter Bereich
- m: Abstand zwischen den Kanten der mittleren und der äußeren Scheiben

## Patentansprüche

1. Isolierglaseinheit (I), mindestens umfassend
- eine erste äußere Scheibe (13), eine ebenso große zweite äußere Scheibe (14), die deckungsgleich zur ersten äußeren Scheibe (13) angeordnet ist, und eine dazwischen angeordnete kleinere mittlere Scheibe (15), wobei
- die mittlere Scheibe (15) über einen umlaufenden ersten Abstandhalterrahmen (6.1) mit der ersten äußeren Scheibe (13) unter Bildung eines ersten inneren Scheibenzwischenraums (16.1) feuchtigkeitsdicht verbunden ist,
- die mittlere Scheibe (15) über einen umlaufenden zweiten Abstandhalterrahmen (6.2) mit der zweiten äußeren Scheibe (14) unter Bildung eines zweiten inneren Scheibenzwischenraums (16.2) feuchtigkeitsdicht verbunden ist,
- die mittlere Scheibe (15) so angeordnet ist, dass die Kanten der mittleren Scheibe (23) bezogen auf die Kanten der äußeren Scheiben (21, 22) zurückversetzt sind, sodass ein umlaufender und durchgehender äußerer Scheibenzwischenraum (17) von der ersten äußeren Scheibe (13), dem ersten Abstandhalterrahmen (6.1), der Kante der mittleren Scheibe (23), dem zweiten Abstandhalterrahmen (6.2) und der zweiten äußeren Scheibe (14) begrenzt ist,
- der äußere Scheibenzwischenraum (17) mit einem sekundären Dichtmittel (18) gefüllt ist, sodass die Kante der mittleren Scheibe (23) mit dem sekundären Dichtmittel (18) bedeckt ist.

2. Isolierglaseinheit (I) nach Anspruch 1, wobei das sekundäre Dichtmittel (18) den äußeren Scheibenzwischenraum (17) vollständig ausfüllt, sodass das sekundäre Dichtmittel (18) bündig mit den Kanten der äußeren Scheiben (21, 22) abschließt.

3. Isolierglaseinheit (I) nach einem der Ansprüche 1 oder 2, wobei die mittlere Scheibe (15) mit einer Low-e-Beschichtung versehen ist, bevorzugt mit einer Silberhaltigen Beschichtung.

4. Isolierglaseinheit (I) nach einem der Ansprüche 1 bis 3, wobei die mittlere Scheibe (15) nicht vorgespannt ist.

5. Isolierglaseinheit (I) nach einem der Ansprüche 1 bis 4, wobei die äußeren Scheiben (13, 14) und die mittlere Scheibe (15) mit dem ersten Abstandhalterrahmen (6.1) und mit dem zweiten Abstandhalterrahmen (6.2) jeweils über ein primäres Dichtmittel (10) verbunden sind, wobei das primäre Dichtmittel (10) bevorzugt ein Polyisobutylen ist.

6. Isolierglaseinheit (I) nach einem der Ansprüche 1 bis 5, wobei der erste Abstandhalterrahmen (6.1) und / oder der zweite Abstandhalterrahmen (6.2) jeweils Hohlprofilabstandhalterrahmen sind, bevorzugt polymere Hohlprofilabstandhalterrahmen.

7. Isolierglaseinheit (I) nach einem der Ansprüche 1 bis 6, wobei die Kante der mittleren Scheibe (23) bezogen auf die Kanten der äußeren Scheiben (21, 22) um 2 mm bis 7 mm in Richtung des inneren Scheibenzwischenraums (16.1, 16.2) versetzt sind, bevorzugt um 3 mm bis 5 mm, besonders bevorzugt um 3,5 mm bis 4,5 mm.

8. Verfahren zur Herstellung einer Isolierglaseinheit (I) nach einem der Ansprüche 1 bis 7 mindestens umfassend:
- Bereitstellen einer ersten äußeren Scheibe (13), einer zweiten äußeren Scheibe (14) und einer mittleren Scheibe (15),
- Befestigen eines ersten Abstandhalterrahmens (6.1) auf der mittleren Scheibe (15) oder der ersten äußeren Scheibe (13),
- Verpressen der ersten äußeren Scheibe (13) mit der mittleren Scheibe (15) unter Bildung eines zweifachen Scheibenpakets,
- Befestigen eines zweiten Abstandhalterrahmens (6.2) auf der zweiten äußeren Scheibe (14),
- Verpressen der zweiten äußeren Scheibe (14) mit dem zweifachen Scheibenpaket aus mittlerer Scheibe (15) und erster äußerer Scheibe (13) unter Bildung eines dreifachen Scheibenpakets mit einem äußeren Scheibenzwischenraum (17),
- Befüllen des äußeren Scheibenzwischenraums (17) in einer Versiegelungsstation (26) mit einem sekundären Dichtmittel (18).

9. Verfahren zur Herstellung einer Isolierglaseinheit (I) nach Anspruch 8, wobei der Transport des zweifachen Scheibenpakets über eine Fördervorrichtung (27) erfolgt, auf der die Kante der ersten äußeren Scheibe (21) und die Kante der mittleren Scheibe (23) gleichzeitig aufliegen.

10. Verfahren zur Herstellung nach Anspruch 8 oder 9, wobei das Verpressen der ersten äußeren Scheibe (13) mit der mittleren Scheibe (15) unter Bildung eines zweifachen Scheibenpakets in einer ersten Pressvorrichtung (25.1) erfolgt und das Verpressen der zweiten äußeren Scheibe (14) mit dem zweifachen Scheibenpaket unter Bildung eines dreifachen Scheibenpakets in einer zweiten Pressvorrichtung (25.2) erfolgt.

11. Vorrichtung zur Herstellung einer Isolierglaseinheit (I) nach einem der Ansprüche 1 bis 7, mindestens umfassend:
- eine erste Pressvorrichtung (25.1) zum Verpressen von zwei Scheiben, eine Versiegelungsstation (26) zum Einbringen eines sekundären Dichtmittels (18), eine Fördervorrichtung (27) zum Transportieren einer Scheibe oder eines Scheibenpakets, wobei
- die Fördervorrichtung (27) so vorgesehen ist, dass die Scheiben oder Scheibenpakete mit deren Kanten auf der Fördervorrichtung (27) aufliegen,
- die Fördervorrichtung (27) ein Rollenförderer ist, der mehrere gestufte Rollen (28) umfasst, wobei die gestuften Rollen (28) einen ersten Bereich (29) mit einem ersten Durchmesser d1 und einen zweiten Bereich (30) mit einem größeren Durchmesser d2 aufweisen, wobei der zweite Bereich (30) zur Unterstützung der Kante der mittleren Scheibe (23) vorgesehen ist.

12. Vorrichtung zur Herstellung einer Isolierglaseinheit (I) nach Anspruch 11, wobei die gestuften Rollen (28) so ausgeführt sind, dass ein Scheibenpaket aus einer äußeren Scheibe (13, 14) und der mittleren Scheibe (15) auf den gestuften Rollen (28) so transportiert werden kann, dass gleichzeitig eine Kante der äußeren Scheibe (21, 22) im ersten Bereich (29) aufliegt und die Kante der mittleren Scheibe (23) im zweiten Bereich (30) aufliegt.

13. Vorrichtung zur Herstellung einer Isolierglaseinheit (I) nach einem der Ansprüche 11 oder 12, umfassend eine zweite Pressvorrichtung (25.2), die in Förderrichtung zwischen der ersten Pressvorrichtung (25.1) und der Versiegelungsstation (26) angeordnet ist.

14. Verwendung der Isolierglaseinheit (I) nach einem der Ansprüche 1 bis 7 als Gebäudeinnenverglasung, Gebäudeaußenverglasung und/oder Fassadenverglasung.
